# EUROPEAN PATENT APPLICATION

(11) **EP 3 409 128 A1**
(43) Date of publication of application: **05.12.2018**
(21) Application number: 18175351.8
(22) Date of filing: 31.05.2018
(51) Int. Cl.: A23L 5/10, A23L 7/196, A23L 11/00, A23L 11/10

(54) **PROCESS FOR COOKING VEGETABLE FOOD**

(30) Priority: 01.06.2017 IT 201700059950
(71) Applicant: Le Bonta' S.R.L., 59100 Prato (IT)
(72) Inventor: CARAPELLI, Giacinto, I-59100 PRATO (IT)
(74) Representative: Long, Giorgio

(57) **Abstract**

The object of the present invention is a process for cooking food of vegetable origin, in particular legumes and cereals.

In particular, the present invention relates to a process for cooking food of vegetable origin, particularly legumes or cereals, which comprises the following steps:
a) rehydration of the legume or cereal in the dried form in water for a specific time;
b) rinsing and dripping of the rehydrated legume or cereal;
c) packaging and sealing at reduced pressure or in a protective atmosphere in autoclavable flexible packages of the rehydrated and drained legume or cereal;
d) cooking of the legume or cereal packaged under controlled temperature and pressure conditions.

## Description

### Technical field of the invention

It is an object of the present invention a process for cooking vegetable food, particularly legumes and cereals.

### Background art

Cooked legumes and cereals are products broadly used by consumers. The market normally offers packages, specially for legumes such as beans, lentils, chickpeas, in glass jars or in metal boxes, in which the cooked food is introduced and sealed in a sterile atmosphere. These products have a considerable commercial success thanks to the convenience of use, which avoids the consumer long cooking processes.

Alternatively, legumes and cereals can be marketed in dried form, for which the end user will have to provide for their cooking.

Although beans, chickpeas, lentils and similar canned foods can be a considerable advantage in terms of time and effort for the consumer, their upstream cooking eliminates a good part of the nutrients and in particular the mineral salts they are rich in.

### Summary of the invention

An object of the present invention is to provide cooked and packaged legumes and cereals that are easy to use, taste and palatability adequate and that preserve their nutritional characteristics in the best possible way.

An object of the present invention is therefore a process for cooking food of vegetable origin, in particular legumes or cereals, as outlined in the attached claims.

Further characteristics and advantages of the process according to the invention will become clear from the following description of preferred embodiments, given by way of non-limiting example.

### Detailed description of the invention

The present invention relates to a process for cooking food of vegetable origin, in particular legumes or cereals, which comprises the following steps:
a) rehydration of the legume or cereal in dried form in water for a specific time;
b) rinsing and dripping of the rehydrated legume or cereal;
c) packaging and sealing at reduced pressure or in a protective atmosphere in autoclavable flexible packs of the rehydrated and drained legume or cereal;
d) cooking of the legume or cereal packaged under controlled temperature and pressure conditions.

In the following description, the term "about" preceding a numerical value indicates a variation of ± 10% of that given numeric value.

The legumes used in the method according to the present invention are preferably selected from:
- beans,
- chickpeas,
- fava beans,
- lentils,
- sojbeans (Edamame, Azuki, etc.).

More preferably, the legumes used are beans, especially borlotti beans or cannellini beans, or chickpeas.

The term "cereals" means both real cereals and so-called "pseudo-cereals" such as buckwheat. The cereals used in the method according to the present invention are preferably selected from:
- barley,
- spelled,
- oats,
- khorasan wheat (also branded Kamut),
- buckwheat,
- quinoa,
- sorghum.

The step a) of rehydration involves the immersion of the legume or cereal in water in predetermined ratios, so as to obtain an at least partial rehydration of the food in dried form.

It is generally obtained a rehydration of the legumes equal to about 80% by weight with respect to the initial weight of the legumes, while for the cereals it is generally obtained a rehydration equal to about 60% by weight with respect to the initial weight of the cereals.

For legumes, the rehydration phase lasts at least 6 hours, preferably at least 7 hours, more preferably about 8 hours, in a volume of water of 3: 1 with respect to the weight of the legumes and at a temperature between 15 ° C and 30 ° C, preferably between 20 ° C and 25 ° C.

For cereals, the rehydration phase lasts at least 10 hours, preferably at least 11 hours, more preferably about 12 hours, in a volume of water of 3: 1 with respect to the weight of the cereals. The temperature of the water containing the cereals is raised to about 80 ° C and maintained at this temperature for a time variable between 30 seconds and 7 minutes, depending on the type of cereal, so the heating is suspended and the temperature is allowed to return naturally at room temperature. Preferably, the heating is continued for 30 seconds - 1.5 minutes, more preferably about 1 minute, in the case of buckwheat, for 4-7 minutes, more preferably about 5 minutes, in the case of Kamut wheat and for 1-3 minutes , more preferably about 2 minutes for all other cereals.

The above rehydration step can be carried out in special steel tanks, for example provided with a steam-heated jacket.

In certain embodiments, step a) of rehydration involves adding flavor enhancers to the water, for example salt, and natural flavors, such as rosemary, garlic, onion or the like, depending on the needs and of tastes.

The amount of the aforementioned additives in the water varies according to the type of added substance and can therefore be easily determined on the basis of routine tests.

The step b) of rinsing and dripping may comprise a step of sorting and elimination of the non conforming, that is visibly altered, legumes or cereals.

The step c) of packaging and sealing under reduced pressure or in a protective atmosphere of the legumes or cereals is generally carried out by introducing a weighed quantity of product into a flexible autoclavable packaging and sealing said package under reduced pressure or in a protective atmosphere, for example by heat-sealing or other conventional systems known to the expert in the field.

The term "reduced pressure" means a pressure lower than atmospheric pressure, for example a vacuum sealing of the type normally used in food products of this type, which provides for a partial removal of the air present in the package before sealing.

The term "protective atmosphere" refers to a conservation environment poor in oxygen and rich in inert gases and / or suitable for storing food. Typical examples of such gas are carbon dioxide or nitrogen.

The term "autoclavable flexible packaging" means a non-rigid package, typically a bag or envelope, made of a plastic or metallized plastic material that is resistant to heat and pressure.

A typical example of such packaging is that known as "doypack" which consists of a heat-sealable bag having a folded bottom which allows the upright hold of the envelope ("stand-up pouch").

Typical materials for said bags or envelopes are multilayer laminates of the type:
- PET / PE,
- PET / Met PET,
- PP bo / Met PET,
- PET / PA / EVOH / PA / PE,
where "PET" stands for polyethylene terephthalate (polyester), "PE" stands for polyethylene (polyolefin), "Met PET" stands for metallized polyethylene terephthalate (typically with aluminum foil), "PP bo" stands for bi-oriented polypropylene (polyolefin), "PA" stands for polyamide (eg nylon) and "EVOH" stands for ethylene vinyl alcohol.

Normally, polyester gives shine and stiffness, nylon puncture resistance, metal gives a barrier effect for gases and polyolefins are used as welding material.

In the packaging of cereals it is preferable to introduce in the package vegetable oil, preferably seed oil (for example sunflower oil) to prevent the cereals from agglutinating. Preferably about 1 ml of oil will be added to each 50 g of cereals.

In certain embodiments, step c) of packaging will include, where it has not already been done in step a) of rehydration, the addition of liposoluble aromas, for example aroma of rosemary, garlic, onion or the like, in appropriately selected quantities.

The cooking step d) is carried out in an autoclave and preferably provides the following heating / cooling cycle:
i) heating up to 115-125 ° C, preferably about 121 ° C, in a time comprised between 8 and 12 minutes, preferably about 10 minutes;
ii) keeping the package at said temperature of the step i) for a period of between 25 and 32 minutes, preferably about 28 minutes, for legumes and between 35 and 42 minutes, preferably about 38 minutes, for the cereals;
iii) first cooling up to a temperature of 90-100 ° C, preferably about 95 ° C, in a time of 3-8 minutes, preferably about 5 minutes for the legumes and about 6 minutes for the cereals;
iv) second cooling up to a temperature of 35-45 ° C, preferably about 40 ° C, in a time comprised between 12 and 18 minutes, preferably about 15 minutes.

In practice, cooking takes place by steam under pressure which is released from rehydrated legumes or cereals and which, with the cooling phase at the end of cooking, is reabsorbed by the food which then comes in the form of separated grains (cereals) or seeds (legumes).

During autoclaving, the product is sterilized as well.

The pressure inside the autoclave is constantly maintained at a value between 1.3 and 1.9 bar, preferably about 1.6 bar, in order to counterbalance the pressure that develops inside the package by the steam formed.

The autoclave is of the type normally used for the sterilization phase of food preparations and may comprise a plurality of trays on which the packs to be subjected to the cooking step are placed.

The cooking step is normally followed by a step of drying, labeling and packaging of the packs of legumes or cereals thus obtained.

The advantages of the process according to the invention consist both in the economy of the process and in the convenience of transport, storage and use of the packages thus obtained. In fact, the flexible packs of the invention have a weight and an encumbrance much lower than that of traditional cans or box packs on the market.

In addition, cooking directly in the package allows to preserve to a large extent the nutritional, especially the content of mineral salts, and organoleptic characteristics of the product.

The moisture content of these products is much lower than those on the market and therefore, at the same weight, the product contains a higher percentage of nutrients.

The limited moisture content also allows legumes and cereals to be in the form of well-separated seeds or grains, which is also advantageous if you want to use the package as a walking snack.

The package obtainable with the process of the invention can also be heated in a microwave oven.

It is evident that only some particular embodiments of the present invention have been described, to which the expert in the art will be able to make all the modifications necessary for its adaptation to particular applications, without departing from the scope of protection of the present invention.

## Claims

1. Process for cooking foods of vegetable origin, especially legumes or cereals, which includes the following steps:
a) rehydration of the legume or cereal in the dried form in water for a specific time;
b) rinsing and dripping of the rehydrated legume or cereal;
c) packaging and sealing under reduced pressure or in a protective atmosphere in autoclavable flexible packs of the rehydrated and drained legume or cereal;
d) cooking of the legume or cereal packaged under controlled temperature and pressure conditions.

2. Process according to claim 1 for cooking legumes, in which said legumes are selected from beans, preferably borlotti beans and cannellini beans, and chickpeas.

3. Process according to claim 1 for cooking cereals, in which said cereals are selected from:
- barley,
- spelled,
- oats,
- khorasan wheat (also branded Kamut),
- buckwheat,
- quinoa,
- sorghum.

4. Process according to any one of Claims 1 to 3, in which step a) of rehydration involves immersion of the legume or cereal in water in predetermined ratios, so as to obtain an at least partial rehydration of the food in dried form, wherein the rehydration of the legumes is preferably equal to about 80% by weight with respect to the initial weight of the legumes, the rehydration of the cereals is preferably equal to about 60% by weight with respect to the initial weight of the cereals.

5. Process according to claim 4, wherein, for the legumes, the rehydration step has a duration of at least 6 hours, preferably at least 7 hours, more preferably about 8 hours, in a volume of water of 3: 1 with respect to the weight of the legumes and at a temperature of between 15 ° C and 30 ° C, preferably between 20 ° C and 25 ° C.

6. Process according to claim 4, wherein, for cereals, the rehydration step lasts at least 10 hours, preferably at least 11 hours, more preferably about 12 hours, in a volume of water of 3: 1 with respect to the weight of cereals and in which the temperature of the water containing the cereals is raised to about 80 ° C and maintained at this temperature for a time ranging from 30 seconds to 7 minutes, depending on the type of cereal, then the heating is suspended and the temperature is allowed to return naturally to room temperature.

7. Process according to claim 6, wherein the heating is continued for 30 seconds - 1.5 minutes, more preferably about 1 minute, in the case of buckwheat, for 4-7 minutes, more preferably about 5 minutes, in the case of Kamut wheat and for 1-3 minutes, more preferably about 2 minutes, for all other cereals.

8. Process according to any of the claims from 4 to 7, in which step a) comprises adding to the water flavor enhancers, for example salt, and natural flavorings.

9. Process according to any one of Claims 1 to 8, in which in step c) the autoclavable flexible package comprises a heat-sealable bag having a folded "stand-up" bottom or a "doypack" package.

10. Process according to claim 9, wherein the autoclavable flexible package is made of a multilayer laminate of the type:
- PET / PE,
- PET / Met PET,
- PP bo / Met PET,
- PET / PA / EVOH / PA / PE,
where "PET" stands for polyethylene terephthalate (polyester), "PE" stands for polyethylene (polyolefin), "Met PET" stands for metallized polyethylene terephthalate (typically with aluminum foil), "PP bo" stands for bi-oriented polypropylene (polyolefin), "PA" stands for polyamide (eg nylon) and "EVOH" stands for ethylene vinyl alcohol.

11. Process according to any one of Claims 1 to 10, in which step c), when carried out on cereals, comprises the introduction into the package of vegetable oil, preferably sunflower oil, preferably in a ratio of about 1 ml of oil to every 50 gr of cereals.

12. Process according to any one of Claims 1 to 11, in which the packaging step c) comprises, where it has not already been done in step a) of rehydration, the addition to the pack of flavor enhancers, for example salt, and of natural liposoluble aromas.

13. Process according to any one of Claims 1 to 12, in which the cooking step d) is carried out in an autoclave at a pressure ranging from 1.3 to 1.9 bar, preferably about 1.6 bar, and comprises the following cycle of heating / cooling:
i) heating up to 115-125 ° C, preferably about 121 ° C, in a time comprised between 8 and 12 minutes, preferably about 10 minutes;
ii) maintaining the package at said temperature of step i) for a period of between 25 and 32 minutes, preferably about 28 minutes, for legumes and between 35 and 42 minutes, preferably about 38 minutes, for cereals;
iii) first cooling to a temperature of 90-100 ° C, preferably about 95 ° C, in a time of 3-8 minutes, preferably about 5 minutes for the legumes and about 6 minutes for the cereals;
iv) second cooling to a temperature of 35-45 ° C, preferably about 40 ° C, in a time comprised between 12 and 18 minutes, preferably about 15 minutes.
